# EUROPÄISCHE PATENTANMELDUNG

(11) **EP 2 793 371 A1**
(43) Veröffentlichungstag der Anmeldung: **22.10.2014**
(21) Anmeldenummer: 13164088.0
(22) Anmeldetag: 17.04.2013
(51) Int. Cl.: H02K 5/20, H02K 1/20, H02K 1/18

(54) **Rotierende elektrische Maschine**

(71) Anmelder: Siemens Aktiengesellschaft, 80333 München (DE)
(72) Erfinder: Dorr, Gerhard, 90584 Allersberg (DE)

(57) **Zusammenfassung**

Die Erfindung betrifft einen Ständer (10) für eine rotierende elektrische Maschine (34), mit einem Blechpaket (12), an das an seinem radial äußeren Umfang ein erster und in Umfangsrichtung benachbart dazu ein zweiter axialer Kühlfluidkanal (74, 76) angrenzt, wobei der erste Kühlfluidkanal (74) von einem Kühlfluid in einer ersten Richtung und der zweite Kühlfluidkanal (76) von dem Kühlfluid in einer zweiten Richtung durchströmt ist, wobei die erste Richtung zur zweiten Richtung entgegengesetzt gerichtet ist, zu welchem Zweck jeweils einer von zwei Druckringen (18) mit jeweils einem der gegenüberliegenden stirnseitigen Enden (14) des Blechpakets (12) verbunden ist, wobei an jedem der Druckringe (18) jeweils eine von zwei Drehmomentstützen (16) befestigt ist, sodass das Blechpaket (12) mit den Druckringen (18) mittels der Drehmomentstützen (16) direkt gestützt ist und auf den Ständer (10) einwirkende Kräfte und Momente über die Drehmomentstützen (16) vollständig ableitbar sind.

## Beschreibung

Die vorliegende Erfindung betrifft einen Ständer für eine rotierende elektrische Maschine sowie eine rotierende elektrische Maschine mit einem ein Blechpaket aufweisenden Ständer und einem in einer Öffnung des Ständers drehbar gelagert angeordneten Läufer.

Gattungsgemäße elektrische Maschinen sowie Ständer hierfür sind dem Grunde nach im Stand der Technik bekannt, sodass es eines gesonderten druckschriftlichen Nachweises nicht bedarf. Bei einer rotierenden elektrischen Maschine ist dem Grunde nach ein Ständer als Stator vorgesehen, der in der Regel eine im Wesentlichen kreisförmige Öffnung zur Aufnahme eines als Rotor ausgebildeten Läufers bereitstellt. In der Öffnung ist der Läufer drehbar gelagert angeordnet, wobei zwischen dem Läufer und dem Ständer ein Luftspalt ausgebildet ist.

Eine rotierende elektrische Maschine ist eine Vorrichtung, die elektrische Energie in mechanische Energie, insbesondere Bewegungsenergie (Motorbetrieb) und/oder mechanische Energie in eine elektrische Energie (Generatorbetrieb) umformt. Bei der Bewegung handelt es sich in der Regel um eine Drehbewegung, die vom Läufer ausgeführt wird. Der Ständer ist im Unterschied zum Läufer drehfest angeordnet, das heißt, bei der Drehbewegung handelt es sich um eine Drehbewegung des Läufers gegenüber dem Ständer.

Der Ständer und der Läufer sind mittels eines magnetischen Flusses verkettet, wodurch im Motorbetrieb die Kraftwirkung, nämlich das Drehmoment erzeugt wird, die den Läufer gegenüber dem Ständer drehend antreibt, und im Generatorbetrieb dem Läufer zugeführte mechanische Energie in Form einer Rotation in elektrische Energie umwandelt. Zu diesem Zweck weisen der Ständer und der Läufer jeweils eine von einem Strom durchflossene Wicklung auf. Im Ständer oder im Läufer kann die Wicklung auch durch einen Permanentmagneten gebildet oder ergänzt sein.

Rotierende elektrische Maschinen der gattungsgemäßen Art sind beispielsweise Drehfeldmaschinen, die an ein mehrphasiges, insbesondere dreiphasiges elektrisches Netz angeschlossen sind, wie beispielsweise Asynchronmaschinen, Synchronmaschinen, Synchronmaschinen mit Dämpferkäfig, oder dergleichen oder auch Gleichstrommaschinen wie Nebenschluss- oder Reihenschlussmaschinen oder dergleichen.

Rotierende elektrische Maschinen weisen in der Regel ein Gehäuse auf. Bei großen rotierenden elektrischen Maschinen wird häufig ein Blechpaket des Ständers in das Gehäuse geschrumpft. Über den Schrumpfsitz kann mittels des Gehäuses das erzeugte Drehmoment in eine Tragstruktur, ein Fundament oder dergleichen eingeleitet und die Maschine abgestützt werden. Häufig sind die Gehäuse der rotierenden elektrischen Maschinen durch Stahlkonstruktionen gebildet, die aus einzelnen Teilen zusammengeschweißt sind. Aufgrund des Dehnungsverhaltens von Stahl ist der Schrumpfsitz vergleichsweise unproblematisch, weshalb sich diese Art von Gehäuse im praktischen Gebrauch bewährt hat.

Es hat sich jedoch gezeigt, dass die Kühlung, insbesondere des Ständers bei einer vorbeschriebenen Anordnung nachteilig ist. Einerseits bildet der Übergang vom Blechpaket zum Gehäuse einen Wärmewiderstand aus, der eine thermische Ankopplung des Blechpaktes an eine Kühlung verschlechtert. Andrerseits erweist es sich als nachteilig für die Kühlung, dass bei axialer Luftströmung das letzte Drittel des Gehäuses nur sehr unzureichend gekühlt wird, weil sich dort die Kühlströmung vom Gehäuse löst. Der entsprechende Maschinenteil wird nur unzureichend gekühlt. Gerade bei großen rotierenden elektrischen Maschinen, zum Beispiel Maschinen mit großer Leistung, Hochspannungsmaschinen oder dergleichen, erweist sich dies als ungünstig.

Die Erfindung hat es sich zur Aufgabe gemacht, eine verbesserte Kühlung für rotierende elektrische Maschinen bereitzustellen.

Als Lösung wird mit der Erfindung ein Ständer für eine rotierende elektrische Maschine, mit einem Blechpaket vorgeschlagen, an das an seinem radial äußeren Umfang ein erster und in Umfangsrichtung benachbart dazu ein zweiter axialer Kühlfluidkanal angrenzt, wobei der erste Kühlfluidkanal von einem Kühlfluid in einer ersten Richtung und der zweite Kühlfluidkanal von dem Kühlfluid in einer zweiten Richtung durchströmt ist, wobei die erste Richtung zur zweiten Richtung entgegengesetzt gerichtet ist, zu welchem Zweck jeweils einer von zwei Druckringen mit jeweils einem der gegenüberliegenden stirnseitigen Enden des Blechpakets verbunden ist, wobei an jedem der Druckringe jeweils eine von zwei Drehmomentstützen befestigt ist, sodass das Blechpaket mit den Druckringen mittels der Drehmomentstützen direkt gestützt ist und auf den Ständer einwirkende Kräfte und Momente über die Drehmomentstützen vollständig ableitbar sind.

Durch die vorteilhafte Aufhängung des Blechpakets des Ständers mittels der beiden Druckringe und der beiden Drehmomentstützen unter Vermeidung eines mit dem Blechpaket verbundenen Gehäuses kann das Blechpaket gehäusefrei gehalten werden, wodurch das Blechpaket an seiner radial äußeren Oberfläche hinsichtlich der Kühlung optimiert werden kann, und zwar indem der dort geschaffene freie Bereich mit dem ersten und dem zweiten Kühlfluidkanal versehen wird. Vorzugsweise sind die Kanalwände der Kühlfluidkanäle einstückig mit einer radial äußeren Oberfläche des Blechpakets ausgebildet. Die Erfindung erlaubt es, eine Verrohrung des Blechpakets zu Kühlzwecken weitgehend zu vermeiden. Die Kühlfluidkanäle befinden sich im Wesentlichen an der äußeren Oberfläche des Blechpakets. Sie können strömungstechnisch in Serie geschaltet sein. Diese Ausgestaltung eignet sich insbesondere bei Einsatz eines Kühlfluids mit einer großen Wärmekapazität und großer Strömungsgeschwindigkeit wie beispielsweise Wasser. Vorteilhaft sind die Kühlfluidkanäle, die die gleiche Strömungsrichtung des Kühlfluids aufweisen, das heißt, die ersten und/oder die zweiten Kühlfluidkanäle, zumindest teilweise parallelgeschaltet. Besonders bevorzugt sind die ersten Kühlfluidkanäle und ebenso die zweiten Kühlfluidkanäle jeweils für sich genommen parallelgeschaltet.

Die weitgehend freie Zugänglichkeit des Blechpakets von außen erlaubt es, eine kostengünstige effiziente Kühlung vorzusehen. Insbesondere im Zusammenwirkung mit dem an das Blechpaket angrenzenden im Gegenstrom vom Kühlfluid durchströmten ersten und zweiten Kühlfluidkanal kann die Leistungsfähigkeit der rotierenden elektrischen Maschine erhöht werden. Die besondere Ausgestaltung gemäß der Erfindung erlaubt es, einen axialen Temperaturgradienten deutlich zu reduzieren. Eine lokale thermische Überlastung kann damit - gerade bei hohen Beanspruchungen - weitgehend vermieden werden. Zugleich kann durch die erfindungsgemäße Ankopplung des Blechpakets an die Kühlfluidkanäle ein geringer thermischer Übergangswiderstand erreicht werden, wodurch eine höhere Wirksamkeit der Kühlung erreicht werden kann. Ein Strömungsquerschnitt der Kühlfluidkanäle ist an die strömungsdynamischen Eigenschaften des Kühlfluids angepasst gewählt.

Dem Grunde nach kann der erste Kühlfluidkanal von einem anderen Kühlfluid durchströmt werden als der zweite Kühlfluidkanal. Besonders einfach sind sowohl der erste als auch der zweite Kühlfluidkanal vom gleichen Kühlfluid durchströmt.

Darüber hinaus kann der hohe Aufwand für das Gehäuse eingespart werden. Dies kommt ferner dem Bestreben entgegen, Aufwand, insbesondere Kosten, für das Gehäuse reduzieren zu können, indem die aufwändigen Gehäusekonstruktionen durch Gusskonstruktionen ersetzt werden. Aus Kostengründen wird dabei Grauguss bevorzugt.

In Bezug auf die rotierende elektrische Maschine erweist sich bei Grauguss das Dehnungsverhalten aufgrund von Temperatureinwirkung von Grauguss als ungünstig. Grundsätzlich ist Grauguss nur bedingt geeignet, Zugspannungen, die infolge von Schrumpfsitzen in der Struktur entstehen, zu übertragen. Deshalb ist es bei Anwendung von Grauguss erforderlich, die Gehäusekonstruktionen aufwändig zu versteifen, wodurch ein großer Teil einer möglichen Einsparung verloren geht. Weitere Hindernisse entstehen bei der Verwendung von Grauguss durch Einschränkungen bezüglich der Kühlung der rotierenden elektrischen Maschine, insbesondere hinsichtlich der Belüftungsquerschnitte.

Durch die Erfindung kann auch hier eine Verbesserung erreicht werden, wodurch der Aufwand für Gehäuse reduziert und zugleich die aus der Verwendung von Grauguss bekannten Nachteile weitgehend zu vermieden werden können.

Gegenüber den bekannten Gehäusekonstruktionen des Stands der Technik kommt die erfindungsgemäße Ausgestaltung mit wesentlich weniger, insbesondere weniger komplexen Bauteilen aus. Die Drehmomentstütze kann an beiden Stirnseiten des Blechpakets angeordnet und gleich ausgeführt sein. Die Stirnseiten des Blechpakets beziehungsweise dessen stirnseitigen Enden sind insbesondere Begrenzungen in axialer Erstreckung des Blechpakets. Axial bezeichnet die Richtung einer Drehachse des im Ständer drehbar angeordneten Läufers. Darüber hinaus kann die Drehmomentstütze kostengünstig aus Grauguss gebildet sein, weil Grauguss im Unterschied zu Zugspannungen Druckspannungen gut übertragen kann.

Die Erfindung nutzt somit die Eigensteifigkeit des Blechpaketes aus und kann deshalb auf ein geschlossenes Gehäuse komplett verzichten, wodurch Freiraum für die Kühlfluidkanäle geschaffen wird.

Bedarfsweise kann ergänzend eine dünnwandige Schutzabdeckung vorgesehen sein, die als einfache Blechkonstruktion kostengünstig herstellbar ist. Dadurch ergibt sich zudem eine Gewichtseinsparung, weil ein Gehäuse, beispielsweise in Form einer kostengünstigen Blechkonstruktion, keine großen Kräfte mehr zu übertragen braucht. Dies erfolgt bei der Erfindung über die mit den Druckringen verbundenen Drehmomentstützen.

Vollständig ableitbar bedeutet, dass sowohl das Gewicht des Ständers als auch im bestimmungsgemäßen Betrieb einwirkende Momente, insbesondere Drehmomente im Wesentlichen ausschließlich über die Drehmomentstützen abgeleitet werden. Weitere separate Einrichtungen zur Kraft- und/oder Drehmomentübertragung, wie zum Beispiel kraftübertragende Gehäuse, Halterungen und/oder dergleichen, können eingespart werden. Insbesondere erlaubt es die Erfindung, tragende Gehäusevorrichtungen sowie hiermit verbundene aufwändige Verbindungsverfahren wie Schrumpfpressen oder dergleichen zu vermeiden. Das Gewicht des Ständers sowie einwirkende Momente werden vorzugsweise ausschließlich mittels der Drehmomentstütze abgeleitet. Die Drehmomentstützen stützen das Blechpaket mit den Druckringen somit direkt.

Im Unterschied zum Stand der Technik ist bei der Erfindung der Ständer über das Blechpaket lediglich an seinen stirnseitigen Enden abgestützt. Anstelle des sonst üblichen, mit dem Blechpaket verbundenen Gehäuses ist bei der Erfindung die Anordnung von Drehmomentstützen vorgesehen, die mit Druckringen verbunden sind. Dazwischen ist keine weitere Abstützung mehr erforderlich, wodurch insbesondere Kontakt mit weiteren Außenteilen weitgehend vermieden werden kann. Dies führt zu einem weiteren Vorteil in Bezug auf Schallemission, weil der Ständer in dem Bereich zwischen den Stirnseiten in der Regel stark schwingt und diese Schwingungen bei Kontakt mit Außenteilen Schall erzeugen können. Die Erfindung erlaubt neben der Anordnung von Kühlrippen zugleich, eine Reduktion der Schallimmission zu erreichen.

Der Ständer weist das Blechpaket auf, das seinerseits aus einzelnen, untereinander elektrisch isolierten ferromagnetischen Blechen besteht. Die Bleche können je nach Verwendungszweck auch als Dynamoblech, Motorenblech, Transformatorenblech oder dergleichen bezeichnet sein. Derartige Bleche unterliegen der Normung, beispielsweise EN10106, EN10107 oder dergleichen. In das Blechpaket eingelassen sind stromführende Wicklungen, die einen magnetischen Fluss bereitstellen. Die Wicklung des Ständers ist somit häufig in das Blechpaket integriert ausgeführt. Der Ständer nimmt die Reaktio in Bezug auf ein Läuferdrehmoment auf und stützt sich gegen eine Auflage ab, um drehfest angeordnet zu sein. Die Abstützung kann durch ein Fundament oder dergleichen Auflage gebildet sein. Das Blechpaket bezeichnet also einen aus ferromagnetischen Werkstoffen hergestellten und damit magnetisierbaren, schichtweise aufgebauten Körper. Die Aufgabe des Blechpakets besteht darin, in Verbindung mit den stromdurchflossenen Wicklungen den magnetischen Fluss zu bündeln.

An den stirnseitigen Enden des Blechpakets sind jeweils die beiden Drehmomentstützen befestigt. Mittels der Drehmomentstützen ist das Blechpaket festlegbar, das heißt, sowohl das Drehmoment in Form der Reaktio als auch das Gewicht des Ständers, insbesondere gegebenenfalls mit dem darin angeordneten Läufer können über die Drehmomentstütze abgeleitet werden. Dadurch sind das Blechpaket und infolgedessen der Ständer drehfest angeordnet im Unterschied zum Läufer.

Die Befestigung der Drehmomentstützen stirnseitig an den Enden des Blechpakets erfolgt über Druckringe, wobei jeweils einer an einem der stirnseitigen Enden des Blechpakets angeordnet ist. Über die Druckringe wird eine zuverlässige, vorzugsweise lösbare, Ankopplung der Drehmomentstützen an das Blechpaket erreicht. Dies ist vorteilhaft, wenn die rotierende elektrische Maschine, insbesondere der Ständer, zu Wartungszwecken, Reparatur oder dergleichen demontiert werden muss.

Die Druckringe selbst sind mit dem Blechpaket vorzugsweise stoffschlüssig verbunden, das heißt, zwischen dem Druckring und dem Blechpaket besteht eine im Wesentlichen nicht lösbare Verbindung. Diese kann zum Beispiel in Form von Löten, Verkleben und/oder dergleichen vorgesehen sein. Alternativ oder ergänzend kann aber auch eine lösbare Verbindung beispielsweise mittels Verschraubungen oder dergleichen vorgesehen sein. Der Druckring erlaubt es, eine zuverlässige mechanische Ankopplung des Blechpakets an die Drehmomentstütze während des bestimmungsgemäßen Betriebs des Ständers in der rotierenden elektrischen Maschine zu gewährleisten. Beispielsweise kann Einsatz des Druckrings unterschiedliches Ausdehnungsverhalten, Korrosion auslösende elektrochemische Vorgänge und/oder dergleichen anpassen beziehungsweise vermeiden helfen.

Besonders vorteilhaft ist die stoffschlüssige Verbindung mittels Schweißen gebildet. Dadurch kann eine besonders zuverlässige und hoch belastbare Verbindung erreicht werden.

Die Drehmomentstütze selbst kann aus Metall, insbesondere kostengünstig aus Grauguss hergestellt sein. Zwischen den Drehmomentstützen ist das Blechpaket von außen frei zugänglich, sofern nicht weitere Einrichtungen in diesem Bereich für den vorgesehenen bestimmungsgemäßen Betrieb der rotierenden elektrischen Maschine, wie beispielsweise Sensoren oder dergleichen, dort angeordnet sind. Vorteilhaft ist diese Anordnung an beiden stirnseitigen Enden des Ständerblechpakets identisch ausgeführt.

Mittels des Druckrings kann erreicht werden, dass ein Drehmoment vom Ständer mittels Flächenpressung zwischen dem Druckring und der Drehmomentstütze auf diese übertragen werden kann. Die Flächenpressung kann beispielsweise dadurch erzeugt werden, dass der Druckring mit der Drehmomentstütze axial verschraubt ist. Dabei ist die Anzahl der Schrauben vorzugsweise derart gewählt, dass die Flächenpressung ausreicht, um im ungünstigsten Lastfall zum Beispiel das Kurzschlussmoment des Motors übertragen zu können. Vorteilhaft ist diese Anordnung an beiden stirnseitigen Enden des Blechpakets des Ständers identisch ausgeführt.

Gemäß einer Ausgestaltung wird vorgeschlagen, dass über den Umfang des Blechpakets verteilt eine Anzahl erster und zweiter Kühlfluidkanäle abwechselnd zueinander benachbart angeordnet ist. Vorzugsweise ist das Blechpaket von angrenzenden Kühlfluidkanälen geschlossen umgeben. Vorteilhaft ist die Anzahl eine gerade Zahl, sodass benachbarte Kühlfluidkanäle immer im Gegenstrom vom Kühlfluid durchströmt werden können. Hierdurch lässt sich eine sehr gleichmäßige Kühlwirkung nicht nur in axialer Richtung sondern auch in Umfangsrichtung erreichen.

Gemäß einer Weiterbindung ist vorgesehen, dass das Blechpaket in den ersten und/oder den zweiten Kühlfluidkanal ragende Kühlrippen aufweist. Vorzugsweise sind die Kühlrippen einstückig mit dem Blechpaket ausgebildet. Beispielsweise können die Kühlrippen von im zusammengestellten Zustand das Blechpaket ausbildenden Blechen gebildet sein. Die einzelnen Bleche können hierfür mit geeigneten Vorsprüngen oder Ausstülpungen versehen sein, die bereits bei der Herstellung der Bleche mitgefertigt werden. Sie können beispielweise durch Stanzen oder dergleichen hergestellt werden. Besonders vorteilhaft können sie mit der Formgebung der Bleche im gleichen Verfahrensschritt hergestellt werden.

Es ist gemäß einem Aspekt der Erfindung vorgesehen, dass sich die Kühlrippen, der erste Kühlfluidkanal und/oder der zweite Kühlfluidkanal über die gesamte axiale Erstreckung des Blechpakets erstrecken. Dadurch lässt sich dir Kühlwirkung insgesamt weiter verbessern. Darüber hinaus kann eine einfache Herstellung des Blechpakets erreicht werden, weil die das Blechpaket bildenden Bleche überwiegend gleich ausgebildet sein können.

Gemäß einer Weiterbildung wird vorgeschlagen, dass das Blechpaket mittels der Druckringe druckbeaufschlagt ist, zu welchem Zweck die Druckringe mittels Zugstangen gegeneinander vorgespannt sind. Dadurch kann das Blechpaket mit einer Eigensteifigkeit versehen werden, sodass das Gehäuse eingespart werden kann. Darüber hinaus kann das Blechpaket auch mittels Verschweißen, Kleben oder dergleichen zu einem festen Verbund geformt sein. Die Druckringe können einstückig als Druckplatten ausgebildet sein oder separate Druckplatte umfassen.

Eine weitere Ausgestaltung sieht vor, dass die Drehmomentstütze eine Stütztraverse aufweist. Die Stütztraverse ist vorzugsweise einstückig mit der Drehmomentstütze verbunden und kann beispielsweise durch einen radial nach außen ragenden Vorsprung gebildet sein. Die Stütztraverse kann aber auch als separates Bauteil ausgebildet sein, das mit der Drehmomentstütze verbunden ist, beispielsweise mittels Verschraubung, Vernietung, Verschweißung, Verklebung und/oder dergleichen. Über die Stütztraverse kann die Drehmomentstütze zum Beispiel an einem Rahmen befestigt sein, der vorzugsweise mit einem Fundament oder einer vergleichbare Auflage verbunden ist. Vorteilhaft sind wenigstens drei vorzugsweise jedoch vier Stütztraversen vorgesehen, wobei die Stütztraversen an gegenüberliegenden Umfangspositionen der Drehmomentstützen angeordnet sind. Dadurch lässt sich eine zuverlässige, stabile Fixierung des Ständers, insbesondere des Blechpakets erreichen. In dieser Ausgestaltung legt die Drehmomentstütze die Position des Läufers gegenüber dem Ständer fest. Damit kann eine handhabbare Baueinheit geschaffen und insbesondere Justierungen der Läuferposition gegenüber dem Ständer abhängig von einem Aufstellort vermieden werden.

Gemäß einer weiteren Ausgestaltung der Erfindung ist vorgesehen, dass die Drehmomentstütze eine Lagervorrichtung für einen Läufer der rotierenden elektrischen Maschine aufweist. Die Lagervorrichtung kann zum Beispiel durch einen Lagerschild gebildet sein, der mit der Drehmomentstütze verbunden ist, insbesondere einstückig mit ihr ausgebildet ist. Der Lagerschild kann eine Lagereinheit aufweisen, die eine Welle des in der Öffnung des Ständers angeordneten Läufers drehbar lagert.

Mit der Erfindung wird ferner eine rotierende elektrische Maschine der gattungsgemäßen Art vorgeschlagen, wobei der Ständer wie zuvor ausgeführt ausgebildet ist. Dadurch kann für die rotierende elektrische Maschine eine hochwirksame Kühlung erreicht werden. Darüber hinaus kann die Maschine einfacher und kostengünstiger ausgebildet sein. Weiterhin kann eine Schallreduktion erreicht werden.

Eine Ausgestaltung der Erfindung sieht vor, dass der erste Kühlfluidkanal stirnseitige Kanalmündungen an den gegenüberliegenden axialen Enden der rotierenden elektrischen Maschine aufweist. Dadurch kann ein thermischer Kurzschluss aufgrund der guten räumlichen Trennung bereits weitgehend vermieden werden. Darüber hinaus kann eine einfache Konstruktion hinsichtlich des ersten Kühlfluidkanals erreicht werden, insbesondere wenn sich der erste Kühlfluidkanal im Wesentlichen ohne Krümmungen in axialer Richtung erstreckt.

Gemäß einer Weiterbildung wird vorgeschlagen, dass der zweite Kühlfluidkanal radiale Kanalmündungen am äußeren Umfang der rotierenden elektrischen Maschine aufweist, die zueinander axial versetzt sind. Dies erlaubt es, den zweiten Kühlfluidkanal thermisch entkoppelt vom ersten Kühlfluidkanal mit dem Kühlfluid zu beaufschlagen. Durch den axialen Versatz der Kanalmündungen des zweiten Kühlfluidkanals untereinander kann zudem bereits eine gute thermische Entkopplung der beiden Kanalmündungen voneinander aufgrund ihres räumlichen Abstands erreicht werden.

Eine weitere Ausgestaltung sieht vor, dass der erste Kühlfluidkanal eine erste Kühlfluidfördervorrichtung und der zweite Kühlfluidkanal eine zweite Kühlfluidfördervorrichtung aufweisen, wobei die erste und die zweite Kühlfluidfördervorrichtung benachbart zueinander, vorzugsweise an einem axialen Ende der rotierenden elektrischen Maschine, angeordnet sind. Das erlaubt es, die beiden Kühlfluidfördervorrichtungen zu einer Baueinheit zusammenzufassen und die Fertigung zu erleichtern. Darüber hinaus kann eine einfache Wartung erreicht werden. Die Kühlfluidfördervorrichtungen sind an das Kühlfluid angepasst ausgebildet. Sie können bei einem Gas als Kühlfluid als Gebläse, Ventilator, Lüfter oder dergleichen ausgebildet sein. Bei einer Flüssigkeit als Kühlfluid können sie als Pumpe oder dergleichen ausgebildet sein.

Ein weiterer Aspekt der Erfindung schlägt vor, dass die erste und die zweite Kühlfluidfördervorrichtung benachbart zueinander im Bereich eines Endes der rotierenden elektrischen Maschine angeordnet sind. Dadurch können die erste und die zweite Kühlfluidfördervorrichtung vorteilhaft zu einer Baueinheit zusammengefasst sein. Die Kühlfluidfördervorrichtungen können Fördermittel für das Kühlfluid, beispielsweise ein Schaufelrad oder dergleichen, aufweisen, die an das zu fördernde Kühlfluid angepasst ausgebildet sind. Die beiden Kühlfluidfördervorrichtungen können einen gemeinsamen Antrieb insbesondere für ihr Fördermittel aufweisen. Vorzugsweise können die Fördermittel mittels des Läufers angetrieben werden, indem zum Beispiel das Fördermittel für das Kühlfluid wie Lüfter, Pumpe oder dergleichen mit einer Welle des Läufers verbunden sind. Beispielsweise kann ein Schaufelrad des Fördermittels auf der Welle aufgeflanscht sein. Dadurch kann Montage- und Wartungsaufwand reduziert werden.

Die Fördermittel der ersten und die zweiten Kühlfluidfördervorrichtung können im Wesentlich gleich sein. Sie können darüber hinaus auch abweichend voneinander ausgebildet sein, beispielsweise wenn eines der Fördermittel das Kühlfluid durch den zugeordneten Kühlfluidkanal drückt, wohingegen das andere der Fördermittel das Kühlfluid durch den zugeordneten Kühlfluidkanal saugt. Die Fördermittel können entsprechend dieser Betriebsarten angepasst ausgebildet sein. Bei Luft als Kühlfluid können die Fördermittel als Radiallüfter ausgebildet sein. Bei der Betriebsart des Saugens kann ferner vorgesehen sein, dass im Bereich des Fördermittels eine ergänzende Kühlfluidführungseinheit vorgesehen ist, mittels der die Betriebsart des Saugens unterstützt werden kann. Die Kühlfluidführungseinheit kann durch einen Einsatz, beispielsweise in Form eines Leitblechs oder dergleichen gebildet sein.

Eine Ausgestaltung sieht vor, dass die rotierende elektrische Maschine ein vom Blechpaket des Ständers beabstandetes Gehäuse aufweist. Dadurch kann ein Schutz der elektrischen Maschine, insbesondere der Kühlrippen vor äußeren Einwirkungen erreicht werden. Zugleich erlaubt es die erfindungsgemäße Konstruktion, in Zusammenwirkung mit den Kühlrippen auf einfache Weise mit wenig komplexen Bauteilen Kühlkanäle auszubilden. Das Gehäuse braucht bei der Erfindung nämlich keine Drehmomente übertragen und auch keine thermische Ankopplung realisieren. Dadurch kann das Gehäuse kostengünstig aus Blech und mit gewünschten Strukturen hergestellt sein. Natürlich erlaubt es die Erfindung, auch Gehäuse aus Werkstoffen wie Kunststoff, Verbundwerkstoffen, beispielsweise faserverstärkten Kunststoffen oder dergleichen herzustellen.

Darüber hinaus kann mit der Erfindung das aufwändige Fügen von Ständer und Gehäuse weitgehend vermieden werden, weil eine Verbindung von Gehäuse und Ständer, insbesondere Blechpaket nicht mehr erforderlich ist. Infolgedessen ist auch eine Fertigung von Ständer beziehungsweise Ständerbauteilen wie dem Blechpaket und Gehäuse mit seinen Bauteilen nicht mehr an die für das Fügen erforderlichen engen Toleranzen gebunden. Das Gehäuse bildet demnach lediglich noch eine dünnwandige Schutzabdeckung, woraus sich ergänzend eine Gewichtseinsparung ergibt. Dadurch kann Aufwand, insbesondere können Kosten eingespart werden.

Ferner kann vorgesehen sein, dass das Gehäuse eine Fluidleitvorrichtung für das Kühlfluid aufweist. Die Fluidleitvorrichtung dient dem Führen eines Kühlfluids im bestimmungsgemäßen Betrieb. Das Kühlfluid kann beispielsweise ein Gas wie Luft, Helium oder dergleichen oder auch eine Flüssigkeit wie Wasser, Alkohol oder dergleichen sein, auf der die Kühlwirkung basiert. Besonders vorteilhaft erweist sich eine Luftkühlvorrichtung, zu welchem Zweck das Gehäuse einen Ventilator aufweist, der über eine Einlassöffnung Kühlluft als Kühlfluid ansaugt und zur rotierenden elektrischen Maschine, beispielsweise dem Blechpaket, dem Läufer und/oder dergleichen führt. Über eine Austrittsöffnung des Gehäuses kann die erwärmte Kühlluft wieder abgeführt werden. Dies kann auch entsprechend des gewählten Kühlfluids angepasst sein.

In einer weiteren Ausgestaltung bildet die Fluidleitvorrichtung mit den Kühlrippen, vorzugsweise geschlossene, Fluidkanäle aus. Dadurch kann eine besonders wirksame Kühlung erreicht werden, die möglichst viel durchströmendes Fluid zur Kühlung nutzen kann.

Um die Schallunterdrückung weiter zu verbessern, kann vorgesehen sein, dass zwischen dem Blechpaket und dem Gehäuse ein schalldämmendes Material angeordnet ist. Dies kann beispielsweise als eigene Schicht mit dem Gehäuse verbunden sein. Das schalldämmende Material selbst kann durch einen porigen Werkstoff gebildet sein, beispielsweise einen Schaumstoff, insbesondere einen offenporigen Schaumstoff, einen Faserstoff, beispielsweise Mineralfaser, Steinwolle oder dergleichen, oder Kombinationen hiervon. Zwischen dem Blechpaket und dem Gehäuse beziehungsweise dem schalldämmenden Material kann ferner ein Luftspalt vorgesehen sein, der ein Durchströmen des Kühlfluids erlaubt.

Vorteilhaft umfasst die rotierende elektrische Maschine einen mit einer Stütztraverse einer Drehmomentstütze verbindbaren Grundrahmen. Der Grundrahmen kann an die Drehmomentstützen adaptiert ausgebildet sein, sodass eine zuverlässige und einfach herzustellende Verbindung mit einem Fundament, oder einer dergleichen Auflage realisiert werden kann. Besonders vorteilhaft kann die Drehmomenteinleitung in unmittelbarer Nähe eines Fußes am Grundrahmen erfolgen, wodurch sich ein sehr günstiger Kraftfluss ergibt. Dadurch kann ferner die Möglichkeit eröffnet werden, die Wandstärke des Grundrahmens im Bereich zwischen den Füßen zu minimieren. Daraus ergeben sich weitere Gewichts- und Kostenvorteile. Der Grundrahmen ist vorzugsweise Bestandteil der rotierenden elektrischen Maschine.

Eine weitere Ausgestaltung sieht vor, dass zwischen der Stütztraverse und dem Grundrahmen eine Dämpfungseinheit angeordnet ist. Die Dämpfungseinheit kann beispielsweise durch ein elastisches Bauelement gebildet sein, beispielsweise einem Gummipuffer, einem elastischen Kunststoffelement und/oder dergleichen. Dadurch lässt sich eine weitere Entkopplung der rotierenden elektrischen Maschine von der Auflage erreichen.

Gemäß einer Weiterbildung wird vorgeschlagen, dass die rotierende elektrische Maschine einen inneren, vorzugsweise hermetisch geschlossenen, Kühlkreislauf aufweist. Mittels des inneren Kühlkreislaufs kann eine gleichmäßigere Temperaturverteilung entlang der axialen Erstreckung der rotierenden elektrischen Maschine erreicht werden. Vorzugsweise basiert der innere Kühlkreislauf auf Luft als Kühlfluid und weist einen Lüfter sowie Kühlkanäle auf, die den Kühlkreislauf bilden.

Weitere Merkmale und Vorteile sind der folgenden Beschreibung eines Ausführungsbeispiels zu entnehmen. Die Beschreibung dient lediglich zur Erläuterung der Erfindung und soll diese nicht beschränken.

Es zeigen:
- FIG 1: eine schematische vertikale, axiale Schnittansicht einer rotierenden elektrischen Maschine mit einer Kühlung gemäß der Erfindung,
- FIG 2: eine schematische horizontale, axiale Schnittdarstellung der rotierenden elektrischen Maschine gemäß FIG 1, wobei die Darstellung auf die Kühlung reduziert ist,
- FIG 3: eine schematisch perspektivische Gesamtansicht der rotierenden elektrischen Maschine gemäß FIG 1, und
- FIG 4: eine schematisch perspektivische Explosionsdarstellung einer rotierenden elektrischen Maschine mit einem Ständer gemäß der Erfindung.

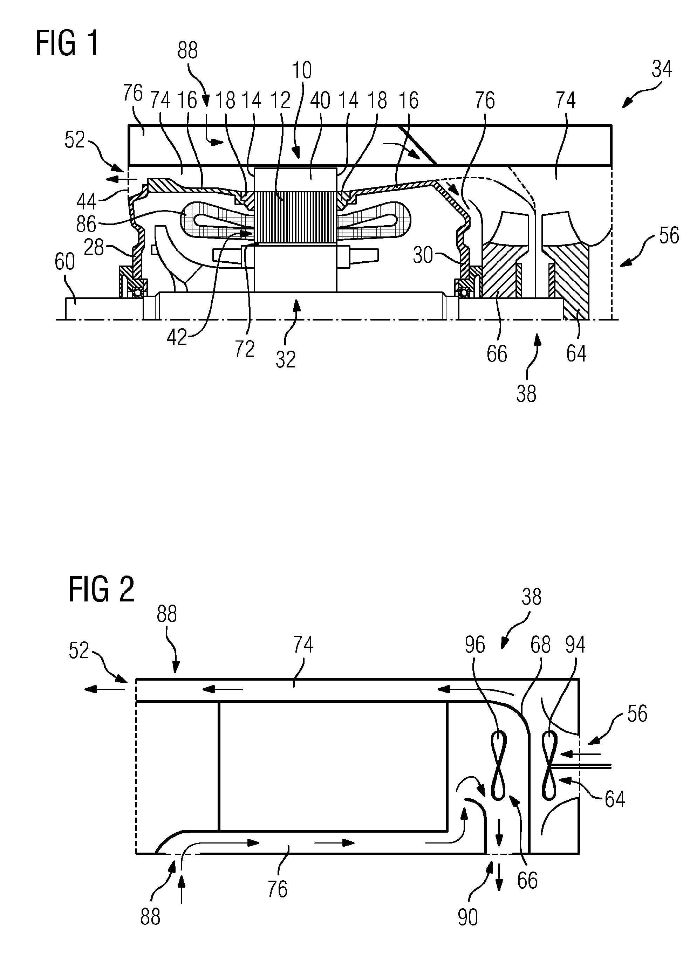

FIG 1 zeigt in schematischer Schnittansicht einen Ständer 10 einer rotierenden elektrischen Maschine 34. Der Ständer 10 weist ein Blechpaket 12 auf, das eine Öffnung 72 für einen Läufer 32 bereitstellt. Die Öffnung 72 ist kreisrund ausgebildet. Im Bereich der öffnungsseitigen Oberfläche des Blechpaktes 12 sind umfänglich Ständernuten 42 angeordnet, in denen eine Wicklung 86 des Ständers 10 angeordnet ist. Mittels der Wicklung 86 kann ein ständerseitiger Fluss erzeugt werden, der mit einem läuferseitigen Fluss im bestimmungsgemäßen Betrieb verkettet ist.

Der Ständer 10 weist ein Blechpaket 12 auf, an das an seinem radial äußeren Umfang ein erster und in Umfangsrichtung benachbart dazu ein zweiter axialer Luftkanal 74, 76 als Kühlfluidkanal angrenzt. Dadurch sind die Luftkanäle 74, 76 thermisch gut an das Blechpaket 12 angekoppelt, sodass Kühlrohre oder dergleichen am Blechpaket nicht erforderlich sind. Der erste Luftkanal 74 ist von Luft als Kühlfluid in einer ersten Richtung. Der zweite Luftkanal 76 ist von Luft als Kühlfluid in einer zweiten Richtung durchströmt. Die erste Richtung ist zur zweiten Richtung entgegengesetzt gerichtet. Über den Umfang des Blechpakets 12 verteilt ist eine Anzahl erster und zweiter Luftkanäle 74, 76 abwechselnd zueinander benachbart angeordnet. Die Kühlrippen 40, der erste Luftkanal 74 und der zweite Luftkanal 76 sich erstrecken über die gesamte axiale Erstreckung des Blechpakets 12.

Damit das Blechpaket 12 an die Luftkanäle 74, 76 angrenzen kann, ist jeweils einer von zwei Druckringen 18 mit jeweils einem der gegenüberliegenden stirnseitigen Enden 14 des Blechpakets 12 verbunden. An jedem der Druckringe 18 jeweils eine von zwei Drehmomentstützen 16 befestigt ist, sodass das Blechpaket 12 mit den Druckringen 18 mittels der Drehmomentstützen 16 direkt gestützt ist und auf den Ständer 10 einwirkende Kräfte und Momente über die Drehmomentstützen vollständig ableitbar sind. Das Blechpaket 12 ist mittels der Druckringe 18 druckbeaufschlagt, zu welchem Zweck die Druckringe 18 als Druckplatten ausgebildet sind und mittels nicht dargestellter Zugstangen gegeneinander vorgespannt sind.

Ferner ist aus FIG 1 ersichtlich, dass das Blechpaket 12 radial nach außen ragende Kühlrippen 40 aufweist, die einstückig mit dem Blechpaket 12 ausgebildet sind. Die Kühlrippen 40 sind vorliegend in einem Herstellungsprozess mit den einzelnen Blechen des Blechpakets 12 hergestellt.

Zu erkennen ist weiterhin ein Druckring 18, der mit dem Ständerblechpaket 12 verschweißt ist. Der Druckring 18 stellt Verschraubungen bereit, mittels denen eine Verbindung zu einer Drehmomentstütze 16 herstellbar ist.

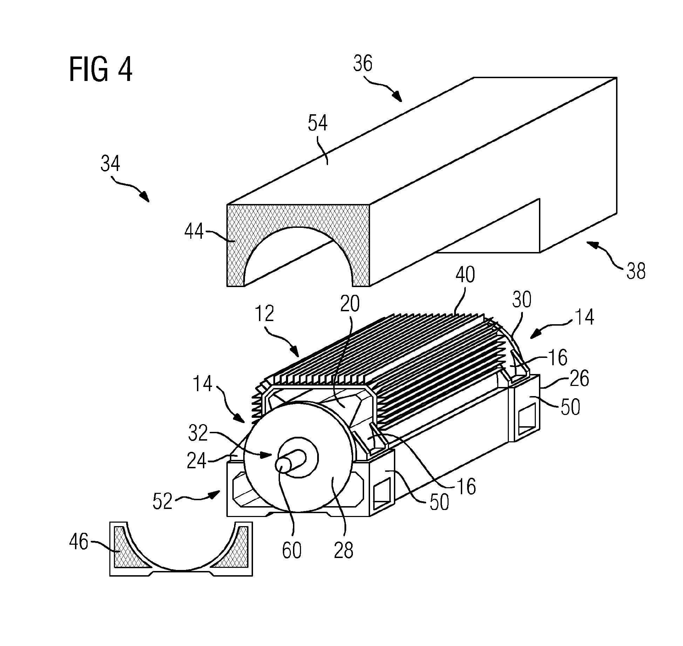

Dies ermöglicht eine lösbare Befestigung des Ständerblechpakets 12 an der Drehmomentstütze 16, sodass zu Wartungszwecken oder dergleichen eine einfache Demontage bereitgestellt werden kann. Ferner ist in FIG 4 ein Rückströmkanal 20 sichtbar, der Bestandteil eines nicht dargestellten inneren Kühlkreislaufs ist, zu dem später noch ausgeführt werden wird.

FIG 4 zeigt eine Gesamtansicht in perspektivischer Explosionsdarstellung der elektrischen Maschine 34 mit dem Ständer 10 sowie einen in der Öffnung 72 angeordneten Läufer 32, von dem ein Ende einer Welle 60 nach vorne herausragt. Die rotierende elektrische Maschine 34 umfasst ferner einen Grundrahmen 26, der mittels Verschraubungen 70 im Bereich von Füßen 50 mit einem nicht bezeichneten Fundament verbunden ist. Der Grundrahmen 26 weist zu diesem Zweck Füße 50 auf, in denen die Verschraubung 70 anordbar ist. Ferner stellen die Füße 50 eine Auflage bereit, auf der Stütztraversen 24 der Drehmomentstützen 16 aufliegen und mit dem Grundrahmen 26 verbunden sind. An den stirnseitigen Enden 14 des Blechpakets 12 des Ständers 10 sind Lagerschilde 28, 30 als Lagervorrichtung für den Läufer 32 vorgesehen. Durch die Lagerschilde 28, 30 ist der Läufer 32 innerhalb der Öffnung 72 drehbar gelagert angeordnet. Zu erkennen ist ferner der Rückströmkanal 20, der jeweils in den Ecken des rechteckigen Querschnitts des Blechpakets 12 angeordnet ist.

Im oberen Bereich der FIG 4 ist ein Gehäuse 36 dargestellt, welches eine Blechabdeckung 54 aufweist, und in einem hinteren Bereich als Baueinheit eine Kühlvorrichtung 38 mit einer Luftleitvorrichtung bereitstellt.

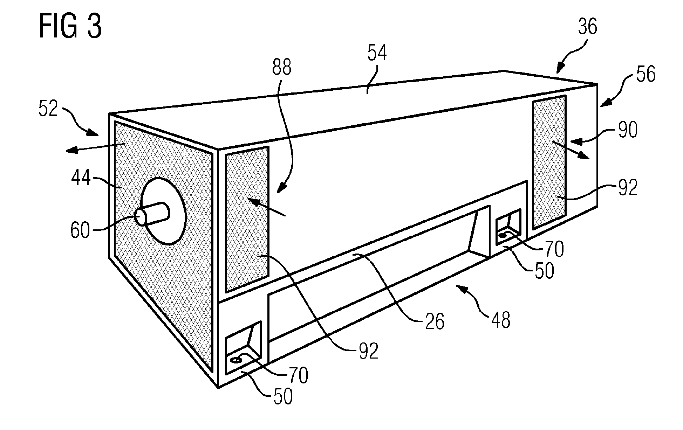

FIG 3 zeigt in schematischer perspektivische4r Darstellung eine Gesamtansicht der rotierenden elektrischen Maschine 34.

Fig. 2 zeigt in schematischer Schnittdarstellung das auf der Erfindung basierende Kühlsystem der rotierenden elektrischen Maschine 34. Über eine Lufteintrittsöffnung 56 als Kanalmündung saugt ein erster Ventilator 64 als Fördermittel Luft als Kühlfluid beziehungsweise Kühlmittel an und fördert dies durch den Luftkanal 74, der im Bereich des Blechpakets 12 von Kühlrippen 40 durchsetzt ist, bis zu einer frontseitigen Luftaustrittsöffnung 52 als Kanalmündung, durch die die erwärmte Luft austritt. Zu diesem Zweck weist die Blechabdeckung 54 frontseitig, das heißt, im Bereich des Endes einer Welle 60 des Läufers 32, ein Lochblech 44 auf, durch das die Kühlluft austreten kann. Entsprechend ist im unteren Bereich der rotierenden elektrischen Maschine 34 ein Lochblech 46 vorgesehen. Entsprechend ist die Lufteintrittsöffnung 56 mit einem Lochblech versehen, das jedoch in den Figuren nicht dargestellt ist.

Ferner ist aus FIG 2 ersichtlich, dass der zweite Luftkanal 76 ebenfalls im Bereich des Blechpakets 12 von Kühlrippen 40 durchsetzt ist. Der zweite Luftkanal 76 weist im Unterschied zum ersten Luftkanal 74 eine radial ausgerichtete Lufteintrittsöffnung 88 als Kanalmündung auf, über die ein zweiter Ventilator 66 als Fördermittel Luft als Kühlfluid durch den zweiten Luftkanal 76 ansaugt und zu einer ebenfalls radial ausrichteten Luftaustrittsöffnung 90 als Kanalmündung fördert, durch die die erwärmte Luft austritt. Die Lufteintrittsöffnung 88 und die Luftaustrittsöffnung 90 sind axial versetzt zueinander angeordnet und weisen jeweils ein Lochblech 92 auf (FIG 3).

FIG 2 zeigt weiterhin, dass die Kühlvorrichtung 38 den ersten Ventilator 64 als Kühlfluidfördervorrichtung und den zweiten Ventilator 66 als Kühlfluidfördervorrichtung als Baueinheit umfasst. Beide Ventilatoren 64, 66 weisen Schaufelräder 94, 96 auf, die auf der Welle 60 des Läufers 32 aufgeflanscht sind. Der erste und der zweite Luftkanal 74, 76 sind mittels einer Trennwand 68 aerodynamisch voneinander getrennt. Beide Ventilatoren 64, 66 sind benachbart zueinander angeordnet, und zwar im Bereich eines axialen Endes der rotierenden elektrischen Maschine 34.

Um einen axialen Temperaturgradienten der rotierenden elektrischen Maschine 34 reduzieren zu können, weist die rotierende elektrische Maschine 34 ergänzend einen inneren Kühlkreislauf auf, der mittels eines nicht dargestellten inneren Ventilators angetrieben wird. Der innere Kühlkreislauf umfasst ferner den Rückströmkanal 20, der vorliegend durch mehrere in den Ecken des rechteckigen Querschnitts des Blechpakets 12 angeordnete Kanäle gebildet ist.

Sowohl der erste Ventilator 64 als auch der zweite Ventilator 66 werden mittels der Welle 60 angetrieben. Zu diesem Zweck sind die entsprechenden Schaufelräder 94, 96 auf die Welle 60 aufgeflanscht. Die Blechabdeckung 54 sorgt somit dafür, dass die Luft von den Ventilatoren 64, 66 durch die Zwischenräume zwischen den Kühlrippen 40 hindurchgeführt wird, ohne dass sie seitlich entweichen kann. Dadurch sind geschlossene Luftkanäle 74, 76 gebildet, wodurch eine gute Kühlwirkung erreicht wird.

In der vorliegenden Ausgestaltung ist ferner vorgesehen, dass das Blechpaket 12 durch die an den stirnseitigen Enden 14 vorgesehenen Druckringe 18 axial gepresst wird. Die Druckringe 18 sind als Druckplatten ausgebildet und über Zugstangen miteinander verbunden, die über den Umfang des Blechpakets 12 verteilt angeordnet und mit dem Blechpaket 12 sowie den Druckringen 18 unter Druck verschweißt sind. Dadurch wird das Blechpaket 12 stabilisiert. Jede der Druckplatten 18 besitzt eine Mehrzahl von Gewindebohrungen, um die Verschraubungen ausbilden zu können. Ferner umfasst jede der Druckplatten 18 eine Zentrierung für die Drehmomentstützen 16. Diese Anordnung ermöglicht es, das Drehmoment, das auf den Ständer 10 im bestimmungsgemäßen Betrieb einwirkt, über Flächenpressung zwischen den Druckringen 18 und den Drehmomentstützen 16 zu übertragen. Die Flächenpressung entsteht durch die Verschraubungen 22 in axialer Richtung. Die Anzahl der Verschraubungen ist derart gewählt, dass die Flächenpressung ausreicht, im ungünstigsten Lastfall auch das Kurzschlussmoment der rotierenden elektrischen Maschine 34 übertragen zu können. Die Anordnung von Druckring 18 mit Drehmomentstütze 16 ist vorliegend an beiden stirnseitigen Enden 14 des Blechpakets 12 identisch ausgeführt.

Das Gehäuse 36 ist als Blechgehäuse ausgebildet und dient lediglich dem Schutz der rotierenden elektrischen Maschine 34. Das Gehäuse 36 ist somit nicht mit dem Ständer 10 mechanisch verbunden, und kann deshalb auch keine Schwingungen des Ständers 10 aufnehmen. Dadurch kann eine geringe Schallaussendung erreicht werden.

Die Erfindung ermöglicht eine Erhöhung der Materialausnutzung durch Vermeiden von HotSpots in der rotierenden elektrischen Maschine. Dadurch kann ein Materialeinsatz und infolgedessen Kosten reduziert werden.

Ferner erlaubt es die Erfindung, eine ausgewogene Temperaturverteilung, insbesondere in axialer Richtung zu erreichen, wodurch eine verbesserte mechanische Struktur erreichbar ist. Dies erlaubt es, einen inneren Kühlkreislauf zu reduzieren oder einzusparen. Ferner können Lagertemperaturen reduziert werden, wodurch eine Lebensdauer der Lager und des Lagerfetts sowie längere Wartungsintervalle erreicht werden können.

Schließlich kann eine Geräuschreduzierung durch die erfindungsgemäße Aufteilung des Kühlfluidstroms erreicht werden.

Das vorgenannte Ausführungsbeispiel dient lediglich der Erläuterung der Erfindung und ist für diese nicht beschränkend. Insbesondere können natürlich Merkmale und Ausführungsbeispiele in beliebiger Weise miteinander kombiniert werden, um zu weiteren bedarfsgerechten Ausgestaltungen zu gelangen, ohne den Gedanken der Erfindung zu verlassen.

## Patentansprüche

1. Ständer (10) für eine rotierende elektrische Maschine (34), mit einem Blechpaket (12), an das an seinem radial äußeren Umfang ein erster und in Umfangsrichtung benachbart dazu ein zweiter axialer Kühlfluidkanal (74, 76) angrenzt, wobei der erste Kühlfluidkanal (74) von einem Kühlfluid in einer ersten Richtung und der zweite Kühlfluidkanal (76) von dem Kühlfluid in einer zweiten Richtung durchströmt ist, wobei die erste Richtung zur zweiten Richtung entgegengesetzt gerichtet ist, zu welchem Zweck jeweils einer von zwei Druckringen (18) mit jeweils einem der gegenüberliegenden stirnseitigen Enden (14) des Blechpakets (12) verbunden ist, wobei an jedem der Druckringe (18) jeweils eine von zwei Drehmomentstützen (16) befestigt ist, so dass das Blechpaket (12) mit den Druckringen (18) mittels der Drehmomentstützen (16) direkt gestützt ist und auf den Ständer (10) einwirkende Kräfte und Momente über die Drehmomentstützen (16) vollständig ableitbar sind.

2. Ständer nach Anspruch 1,
**dadurch gekennzeichnet, dass** über den Umfang des Blechpakets (12) verteilt eine Anzahl erster und zweiter Kühlfluidkanäle (74, 76) abwechselnd zueinander benachbart angeordnet ist.

3. Ständer nach Anspruch 1 oder 2,
**dadurch gekennzeichnet, dass** das Blechpaket (12) in den ersten und/oder den zweiten Kühlfluidkanal (74, 76) ragende Kühlrippen (40) aufweist.

4. Ständer nach Anspruch 3,
**dadurch gekennzeichnet, dass** die Kühlrippen (40) und das Blechpaket (12) einstückig ausgebildet sind.

5. Ständer nach Anspruch 3 oder 4,
**dadurch gekennzeichnet, dass** sich die Kühlrippen (40), der erste Kühlfluidkanal (74) und/oder der zweite Kühlfluidkanal (76) über die gesamte axiale Erstreckung des Blechpakets (12) erstrecken.

6. Ständer nach einem der Ansprüche 1 bis 5,
**dadurch gekennzeichnet, dass** das Blechpaket (12) mittels der Druckringe (18) druckbeaufschlagt ist, zu welchem Zweck die Druckringe (18) mittels Zugstangen gegeneinander vorgespannt sind.

7. Rotierende elektrische Maschine (34) mit einem ein Blechpaket (12) aufweisenden Ständer (10) und einem in einer Öffnung des Ständers (10) drehbar gelagert angeordneten Läufer (32), **dadurch gekennzeichnet, dass** der Ständer (10) nach einem der vorhergehenden Ansprüche ausgebildet ist.

8. Rotierende elektrische Maschine (34) nach Anspruch 7,
**dadurch gekennzeichnet, dass** der erste Kühlfluidkanal (74) stirnseitige Kanalmündungen (52, 56) an den gegenüberliegenden axialen Enden der rotierenden elektrischen Maschine (34) aufweist.

9. Rotierende elektrische Maschine (34) nach Anspruch 7 oder 8, **dadurch gekennzeichnet, dass** der zweite Kühlfluidkanal (76) radiale Kanalmündungen (88, 90) am äußeren Umfang der rotierenden elektrischen Maschine (34) aufweist, die zueinander axial versetzt sind.

10. Rotierende elektrische Maschine (34) nach einem der Ansprüche 7 bis 9,
**dadurch gekennzeichnet, dass** der erste Kühlfluidkanal (74) eine erste Kühlfluidfördervorrichtung (64) und der zweite Kühlfluidkanal (76) eine zweite Kühlfluidfördervorrichtung (66) aufweisen, wobei die erste und die zweite Kühlfluidfördervorrichtung (64, 66) benachbart zueinander angeordnet sind.

11. Rotierende elektrische Maschine nach Anspruch 10,
**dadurch gekennzeichnet, dass** die erste und die zweite Kühlfluidfördervorrichtung (64, 66) benachbart zueinander im Bereich eines axialen Endes der rotierenden elektrischen Maschine (34) angeordnet sind.

12. Rotierende elektrische Maschine nach einem der Ansprüche 7 bis 11, **gekennzeichnet durch** ein Gehäuse (36) mit einer Fluidleitvorrichtung für das Kühlfluid.

13. Rotierende elektrische Maschine nach Anspruch 12,
**dadurch gekennzeichnet, dass** die Fluidleitvorrichtung mit den Kühlrippen (40), vorzugsweise geschlossene, Kühlfluidkanäle ausbildet.

14. Rotierende elektrische Maschine nach einem der Ansprüche 7 bis 13, **gekennzeichnet durch** einen mit einer Stütztraverse (24) einer Drehmomentstütze (16) verbindbaren Grundrahmen (26).

15. Rotierende elektrische Maschine nach einem der Ansprüche 7 bis 14, **gekennzeichnet durch** einen inneren, vorzugsweise hermetisch geschlossenen, Kühlfluidkreislauf.

## Geänderte Patentansprüche

### Geänderte Patentansprüche gemäss Regel 137(2) EPÜ.

**1.** Ständer (10) für eine rotierende elektrische Maschine (34), mit einem Blechpaket (12), an das an seinem radial äußeren Umfang ein erster und in Umfangsrichtung benachbart dazu ein zweiter axialer Kühlfluidkanal (74, 76) angrenzt, wobei der erste Kühlfluidkanal (74) von einem Kühlfluid in einer ersten Richtung und der zweite Kühlfluidkanal (76) von dem Kühlfluid in einer zweiten Richtung durchströmt ist, wobei die erste Richtung zur zweiten Richtung entgegengesetzt gerichtet ist, zu welchem Zweck jeweils einer von zwei Druckringen (18) mit jeweils einem der gegenüberliegenden stirnseitigen Enden (14) des Blechpakets (12) verbunden ist, wobei an jedem der Druckringe (18) jeweils eine von zwei Drehmomentstützen (16) befestigt ist, so dass das Blechpaket (12) mit den Druckringen (18) mittels der Drehmomentstützen (16) direkt gestützt ist und auf den Ständer (10) einwirkende Kräfte und Momente über die Drehmomentstützen (16) vollständig abgeleitet sind.

**2.** Ständer nach Anspruch 1,
**dadurch gekennzeichnet, dass** über den Umfang des Blechpakets (12) verteilt eine Anzahl erster und zweiter Kühlfluidkanäle (74, 76) abwechselnd zueinander benachbart angeordnet ist.

**3.** Ständer nach Anspruch 1 oder 2,
**dadurch gekennzeichnet, dass** das Blechpaket (12) in den ersten und/oder den zweiten Kühlfluidkanal (74, 76) ragende Kühlrippen (40) aufweist.

**4.** Ständer nach Anspruch 3,
**dadurch gekennzeichnet, dass** die Kühlrippen (40) und das Blechpaket (12) einstückig ausgebildet sind.

**5.** Ständer nach Anspruch 3 oder 4,
**dadurch gekennzeichnet, dass** sich die Kühlrippen (40), der erste Kühlfluidkanal (74) und/oder der zweite Kühlfluidkanal (76) über die gesamte axiale Erstreckung des Blechpakets (12) erstrecken.

**6.** Ständer nach einem der Ansprüche 1 bis 5,
**dadurch gekennzeichnet, dass** das Blechpaket (12) mittels der Druckringe (18) druckbeaufschlagt ist, zu welchem Zweck die Druckringe (18) mittels Zugstangen gegeneinander vorgespannt sind.

**7.** Rotierende elektrische Maschine (34) mit einem ein Blechpaket (12) aufweisenden Ständer (10) und einem in einer Öffnung des Ständers (10) drehbar gelagert angeordneten Läufer (32), **dadurch gekennzeichnet, dass** der Ständer (10) nach einem der vorhergehenden Ansprüche ausgebildet ist.

**8.** Rotierende elektrische Maschine (34) nach Anspruch 7,
**dadurch gekennzeichnet, dass** der erste Kühlfluidkanal (74) stirnseitige Kanalmündungen (52, 56) an den gegenüberliegenden axialen Enden der rotierenden elektrischen Maschine (34) aufweist.

**9.** Rotierende elektrische Maschine (34) nach Anspruch 7 oder 8, **dadurch gekennzeichnet, dass** der zweite Kühlfluidkanal (76) radiale Kanalmündungen (88, 90) am äußeren Umfang der rotierenden elektrischen Maschine (34) aufweist, die zueinander axial versetzt sind.

**10.** Rotierende elektrische Maschine (34) nach einem der Ansprüche 7 bis 9,
**dadurch gekennzeichnet, dass** der erste Kühlfluidkanal (74) eine erste Kühlfluidfördervorrichtung (64) und der zweite Kühlfluidkanal (76) eine zweite Kühlfluidfördervorrichtung (66) aufweisen, wobei die erste und die zweite Kühlfluidfördervorrichtung (64, 66) benachbart zueinander angeordnet sind.

**11.** Rotierende elektrische Maschine nach Anspruch 10,
**dadurch gekennzeichnet, dass** die erste und die zweite Kühlfluidfördervorrichtung (64, 66) benachbart zueinander im Bereich eines axialen Endes der rotierenden elektrischen Maschine (34) angeordnet sind.

**12.** Rotierende elektrische Maschine nach einem der Ansprüche 7 bis 11, **gekennzeichnet durch** ein Gehäuse (36) mit einer Fluidleitvorrichtung für das Kühlfluid.

**13.** Rotierende elektrische Maschine nach Anspruch 12,
**dadurch gekennzeichnet, dass** die Fluidleitvorrichtung mit den Kühlrippen (40), vorzugsweise geschlossene, Kühlfluidkanäle ausbildet.

**14.** Rotierende elektrische Maschine nach einem der Ansprüche 7 bis 13, **gekennzeichnet durch** einen mit einer Stütztraverse (24) einer Drehmomentstütze (16) verbindbaren Grundrahmen (26).

**15.** Rotierende elektrische Maschine nach einem der Ansprüche 7 bis 14, **gekennzeichnet durch** einen inneren, vorzugsweise hermetisch geschlossenen, Kühlfluidkreislauf.
